# EUROPEAN PATENT SPECIFICATION

(11) **EP 4 044 412 B1**
(45) Date of publication and mention of the grant of the patent: **16.09.2026**
(21) Application number: 20873562.1
(22) Date of filing: 06.10.2020
(51) Int. Cl.: H02K 17/16, H02K 3/24, H02K 9/02, H02K 9/08, H02K 15/00, H02K 1/26

(54) **ROTOR FOR ROTATING ELECTRICAL MACHINE**
ROTOR FÜR ELEKTRISCHE DREHMASCHINE
ROTOR DE MACHINE ÉLECTRIQUE TOURNANTE

(30) Priority: 08.10.2019 JP 2019185091
(43) Date of publication of application: 17.08.2022
(73) Proprietor: Kabushiki Kaisha Toshiba, Minato-ku Tokyo (JP)
(72) Inventor: NAKAHAMA, Takafumi, Kawasaki-shi, Kanagawa 212-0013 (JP); SHIMIZU, Shinichi, Kawasaki-shi, Kanagawa 212-0013 (JP); MURAKAMI, Satoru, Kawasaki-shi, Kanagawa 212-0013 (JP); WATANABE, Hirokazu, Kawasaki-shi, Kanagawa 212-0013 (JP); KOYAMA, Taihei, Kawasaki-shi, Kanagawa 212-0013 (JP); ITOH, Akira, Kawasaki-shi, Kanagawa 212-0013 (JP)
(74) Representative: AWA Sweden AB
(86) International application number: PCT/JP2020/037887
(87) International publication number: WO 2021/070823

(56) References cited:
- CN-B- 105 356 687
- JP-A- 2002 125 352
- JP-A- 2016 201 902
- JP-A- H0 965 627
- JP-A- H03 107 701
- JP-A- H06 284 608
- JP-A- H09 233 784
- JP-A- H09 233 784
- US-A1- 2005 073 216

## Description

### Technical Field

Embodiments of the present application relate generally to a rotor of a rotary electric machine with rotor bars.

### Background Art

As an example of rotary electric machines, an induction motor with a caged rotor structure is known. Such a rotary electric machine is disclosed in JP H09 233784 A. The caged rotor includes a rotor iron core, a plurality of rotor bars embedded in the rotor iron core, and an end ring connecting the rotor bars outside the rotor iron core. The rotor bar is inserted into a slot provided with the rotor iron core. Both ends of the rotor bar in the axial direction (bar ends) protrude outward from the both end surfaces of the rotor iron core. By subjecting a swage treatment to the rotor bars, that is, for example, by forming swage grooves in the rotor bars, the rotor bars are fixed to the slots of the rotor iron core. Normally, the swage groove is formed within a range of the rotor iron core, and is not formed in the bar end.

In this condition, there are a plurality of bar ends are arranged in a circumferential manner between the end surface of the rotor iron core and the end ring, and as the rotor rotates, the bar ends function as a radial fan. That is, wind flows in a radial direction when the rotor rotates while wind close to the circumferential velocity of the rotor is generated in the outer peripheral side of the bar ends. When the electric machine is in operation, current flows in the rotor bar, and Joule heat occurs while the above-mentioned wind flow cools down the rotor bars and the rotor. In recent years, as the brazing technique progresses, the bar end length decreases. That results in decrease of radiation area of bar ends, and the cooling performance decreases. Therefore, increase of rotor temperature becomes greater.

### Citation List

### Patent Literature

Patent Literature 1: JP H11-18344 A

### Summary of Invention

### Technical Problem

The embodiments of the present application aim to present a rotor of a rotary electric machine which can improve the cooling performance.

### Solution to Problem

The present invention is defined by the appended independent claim, with embodiments set forth in the appended dependent claims, in the following description and in the drawings.

According to an embodiment, a rotor of a rotary electric machine, comprises: a rotational shaft which is rotatable about a central axis; a rotator core coaxially fixed to the rotational shaft, the rotator core including a first end surface positioned on one end side in an axial direction and a second end surface positioned on the other end side in the axial direction, an outer peripheral surface which is coaxial with the central axis, a plurality of slots each formed to passing therethrough in the axial direction, opening on the first and second end surfaces, disposed at intervals in a circumferential direction of the outer peripheral surface, and a plurality of openings each formed in the outer peripheral surface, extending in the axial direction, and communicating with the slot; a plurality of rotor bars each inserted through the slot, and including a first bar end extending from the first end surface in the axial direction and a second bar end extending from the second end surface in the axial direction; a first annular end ring fixed to extending ends of the first bar ends; and a second annular end ring fixed to extending ends of the second bar ends. Each of the rotor bars includes a swage groove extending in the axial direction to be opposed to the opening, and a first end swage groove formed in the first bar end continuously to the swage groove, and the first end swage groove extends from the position of the first end surface toward the first end ring with being inclined to an outside in a radial direction of the rotator core.

### Brief Description of Drawings

FIG. 1 is a vertical cross-sectional view of a part of a rotary electric machine of an embodiment.
FIG. 2 is a cross-sectional view of the rotor of the rotary electric machine, taken along line A-A of FIG. 1, depicted in a partially enlarged manner.
FIG. 3 is a side surface view of one end of the rotor in an axial direction, depicted in a partially broken manner.
FIG. 4 is a cross-sectional view of the outer peripheral part of the rotor, taken along line B-B of FIG. 3.
FIG. 5 is a schematic cross-sectional view of one bar end of a rotor bar.
FIG. 6A is a cross-sectional view of a rotor bar end, taken along line C-C of FIG. 3.
FIG. 6B is a cross-sectional view of the rotor bar end, in which a swage groove part is depicted in an enlarged manner.
FIG. 7A is a cross-sectional view of the rotor bar end, taken along line D-D of FIG. 3.
FIG. 7B is a cross-sectional view of the rotor bar end, in which the swage groove part is depicted in an enlarged manner.
FIG. 8 is a schematic view of the rotor bar and the swage groove.
FIG. 9 is a cross-sectional view of a rotor of a first modification, in which a bar end part is depicted in an enlarged manner.
FIG. 10 is a cross-sectional view of a rotor of a second modification.
FIG. 11 is a cross-sectional view of a rotor of a third modification.
FIG. 12 is a cross-sectional view of a rotor of a fourth modification.
FIG. 13 is a cross-sectional view of a rotor of a fifth modification.

### Modes for Carrying Out the Invention

Embodiments of the present invention will be described below with reference to the accompanying drawings. Elements like or similar to those disclosed in the above embodiment are denoted by similar reference numbers and are not described in detail here. Each figure is a schematic diagram illustrating the embodiments, and should be used to understand them while the shape, size, and ratio of the figures may differ from the actual implementation of the invention. Such differences are a matter of design to be arbitrarily made with reference to the following description and publically-known arts.

### (Embodiment)

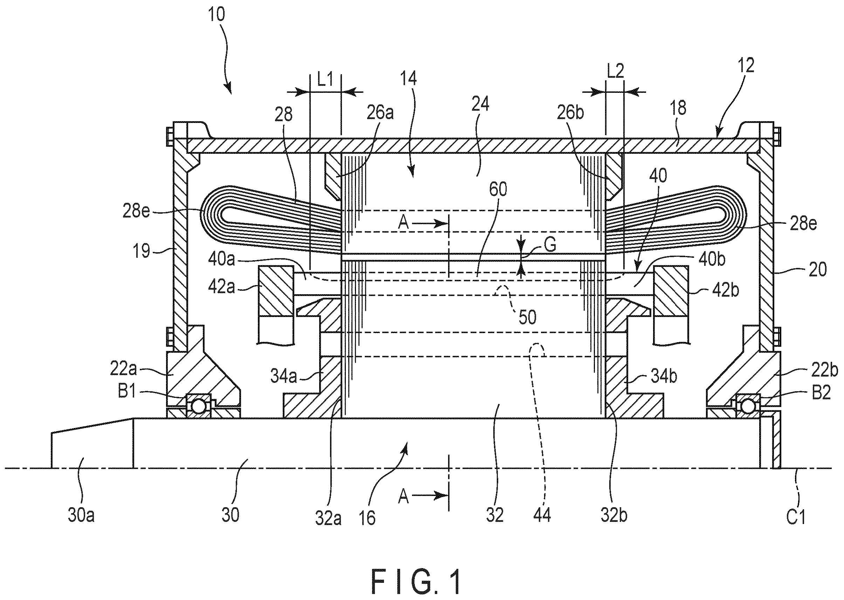

FIG. 1 is a vertical cross-sectional view of a rotary electric machine of an embodiment, which illustrates the rotary electric machine divided half along the central axis thereof.

As in FIG. 1, a rotary electric machine 10 is configured as, for example, an inner rotor type rotary electric machine. The rotary electric machine 10 includes an internally sealed case 12, stator 14 arranged inside the case 12, and cage-type rotor 16.

The case 12 includes a substantially cylindrical frame 18, disk-shaped first bracket 19 attached to one end of the frame 18 in the axial direction in a manner to close the end, and disk-shaped second bracket 20 attached to the other axial end of the frame 18 in a manner to close the other end. To the center of the first bracket 19, a first bearing housing 22a, which incorporates a bearing B1, is bolted. To the center of the second bracket 20, a second bearing housing 22b, which incorporates a bearing B2, is bolted. The bearings B1 and B2 are aligned along the central axis C1 of the rotary electric machine 10.

The stator 14 has a cylindrical stator iron core 24 and a stator coils wound around the stator iron core 24. The stator iron core 24 is supported by the frame 18 with its outer peripheral surface engaged with the inner peripheral surface of the frame 18, and is arranged coaxially with the central axis C1. A pair of annular iron core holders 26a, 26b are fixed to both axial surfaces of the stator iron core 24. The stator iron core 24 includes a number of laminated annular metal plates formed of magnetic material, for example, silicon steel plate. A plurality of slots, each extending in the axial direction, are formed in the inner circumference of the stator iron core 24. The stator coil 28 is embedded in the slots and attached to the stator iron core 24. The coil ends 28e of the stator coil 28 extend in the axial direction from both ends of the stator iron core 24.

The rotor 16 includes a rotational shaft 30, rotor core (rotor iron core) 32, a plurality of rotor bars 40 embedded in the rotor iron core 32, and a pair of end rings 42a and 42b connected to the rotor bars 40 at both ends. The rotational shaft 30 is disposed in the case 12 coaxially with the central axis C1, and is rotatably supported by the bearings B1 and B2 at the one end and the other end thereof in the axial direction, respectively. A drive side end 30a of the rotational shaft 30 extends outside the machine. A coupling for connecting a drive gear device, etc., is attached to the drive side end 30a.

The rotor iron core 32 includes a number of annular metal plates made of magnetic material, for example, silicon steel plate, laminated together to form a substantially cylindrical shape. The rotor iron core 32 is mounted in the approximate center of the rotational shaft 30 in the axial direction, and is located inside the stator iron core 24, coaxially with the central axis C1. The outer periphery of the rotor iron core 32 faces the inner periphery of the stator iron core 24 with a gap G. The axial length of the rotor iron core 32 is substantially equal to the axial length of the stator iron core 24. Furthermore, the rotor iron core 32 has a first end face 32a located at one end in the axial direction and a second end face 32b located at the other end in the axial direction. The first end face 32a and the second end face 32b extend in a manner to be substantially perpendicular to the central axis C1.

The rotor iron core 32 is supported on the rotational shaft 30 by a pair of iron core supports 34a, 34b such that it is sandwiched from both ends in the axial direction. The iron core support plates 34a and 34b are formed in an annular shape, and their outer diameter is smaller than the outer diameter of the rotor iron core 32.

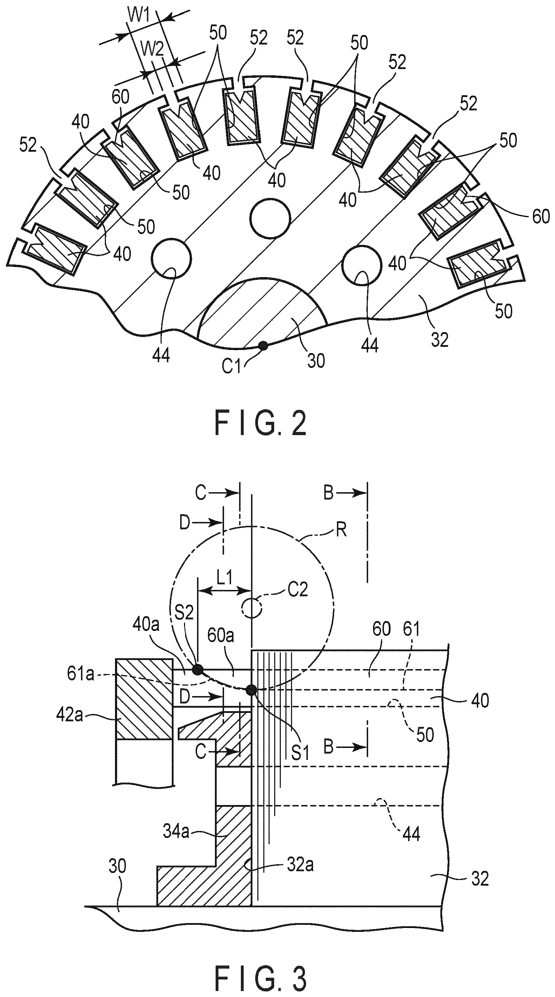

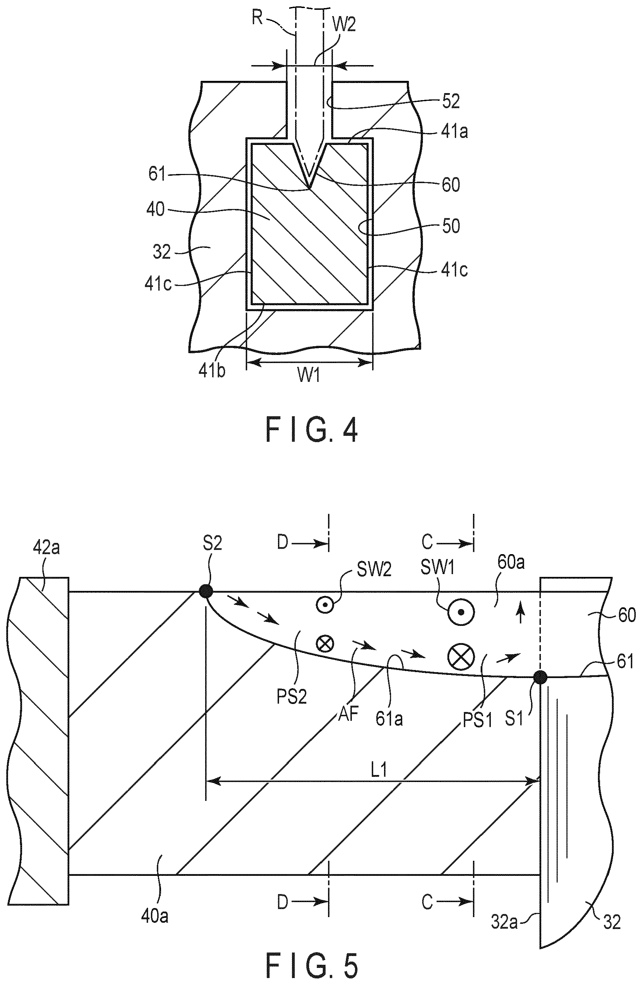

FIG. 2 is a cross-sectional view of the rotor, taken along line A-A in FIG. 1, and FIG. 4 is an enlarged cross-sectional view of the rotor bar portion of the rotor.

As shown in FIGS. 1 and 2, a plurality of ventilation ducts 44 are formed in the rotor iron core 32 and the iron core pushers 34a and 34b, penetrating through them in the axial direction. The ventilation ducts 44 are provided at regular intervals in the circumferential direction around the central axis C1.

A plurality of slots (grooves) 50 are formed on the outer periphery of the rotor iron core 32, each extending in the axial direction and arranged at regular intervals in the circumferential direction. Each slot 50 extends through the rotor iron core 32 in the axial direction, and opens in the first end surface 32 and the second end surface 32b. Each slot 50 also opens to the outer circumference of the rotor iron core 32 through an opening 52 having a circumferential width W2. The opening 52 extends over the entire axial length of the rotor iron core 32. The cross-sectional shape of the slot 50 is, for example, a rectangular shape. The circumferential width W1 of the slot 50 is set to be larger than the circumferential width W2 of the opening 52.

The rotor bar 40 is inserted into each slot 50, and extends in the axial direction of the rotor iron core 32. The cross-sectional shape of the rotor bar 40 is, for example, formed in a rectangular shape with a size (dimension) corresponding to the cross-sectional shape of the slot 50. As shown in FIGS. 2 and 4, the rotor bar 40 has a pair of short side surfaces (upper surface 41a and lower surface 41b) and a pair of long side surfaces (a pair of side surfaces 41c) opposed to each other. The rotor bar 40 is disposed in the slot 50 such that the top surface 41a faces the outer peripheral surface of the rotor iron core 32, that is, the top surface 41a is opposed to the opening 52.

As in FIG. 1, one longitudinal end 40a of the rotor bar 40 (first bar end) extends outward from the first end surface 32a of the rotor iron core 32. The other longitudinal end 40b of the rotor bar 40 (second bar end) extends outward from the second end face 32b of the rotor iron core 32. The extension length of the first bar end 40a and the extension length of the second bar end 40b are set to be substantially equal.

As an example of the swaging process, a swaging groove 60 is formed on the top surface 41a of the rotor bar 40, and thereby, the rotor bar 40 is caulked and fixed in the slot 50 of the rotor iron core 32. That is, a pair of side surfaces 41c of the rotor bar 40 are pressed against the rotor iron core 32 to be fixed to the rotor iron core 32.

A circular end ring 42a is fixed to the extension end of the first bar end 40a. The end ring 42a is arranged coaxially with the central axis C1, and connects the bar ends 40a to each other. A circular end ring 42b is fixed to the extension end of the second bar end 40b. The end ring 42b is disposed coaxially with the central axis C1, and connects the bar ends 40 to each other. The rotor bar 40 and the end rings 42a, 42b are formed of, for example, conductive metal materials such as aluminum and copper.

The rotor bars 40 and a pair of end rings 42a and 42b form a cage rotor of the induction motor. When the stator coil 28 is energized, the rotor iron core 32 is induced to rotate, and the rotating shaft 30 is rotated together with the rotor iron core 32.

Next, the swaging groove 60 will be explained in detail.

FIG. 3 is a side view illustrating one end of the rotor in the axial direction with a partly broken section, and FIG. 4 is a cross-sectional view of the periphery of the rotor, taken along the line B-B of FIG. 3, and FIG. 5 is a schematic cross-sectional view of one bar end of the rotor bar.

As in FIGS. 3 and 4, the swaging groove 60 is formed using, for example, a disc-shaped pressure roller R having a triangularly pointed outer periphery. The outer periphery of the pressure roller R is pressed against the upper surface 41a of the rotor bar 40 through the opening 52 of the rotor iron core 32, and the pressure roller R is moved along the opening 52 while rotating, and thereby, the swaging groove 60 is formed on the upper surface 41a of the rotor bar 40. In this process, the pressure roller R is moved axially from approximately the center of the longitudinal direction of the rotor bar 40 toward the first bar end 40a, and then, the pressure roller R is moved axially from approximately the center of the longitudinal direction of the rotor bar 40 toward the second bar end 40b. This creates a swage groove 60 of constant depth in the rotor bar 40 over the entire length of the area located in the slot 50 of the rotor iron core 32. The swage groove 60 has a triangular cross-sectional shape, with the apex of the triangle forming the bottom edge 61 of the groove.

As shown in FIG. 3, in the processing of the swage groove 60, the rotational center C2 of the pressure roller R moved to the first bar end 40a until the rotational center C2 of the pressure roller R coincides with the first end surface 32a. This causes the first end swage groove 60a, which is continuous with the swage groove 60, to be formed on the first bar end 40a. As shown in FIGS. 3 and 5, the first end swage groove 60a extends from the first end surface 32a to the extension end of the first bar end 40a by a length L1. The first end swage groove 60a extends in such a way that the depth gradually becomes shallower from the first end face 32a to the first groove end S2. That is, the bottom edge 61a of the first end swage groove 60a extends from the bottom edge 61 of the swage groove 60 (base end S1) at the position of the first end face 32a to the first groove end S2 on the upper surface 41a, outward the radial direction in an inclined manner. In this embodiment, the bottom edge 61a is curved and extends in an arc shape.

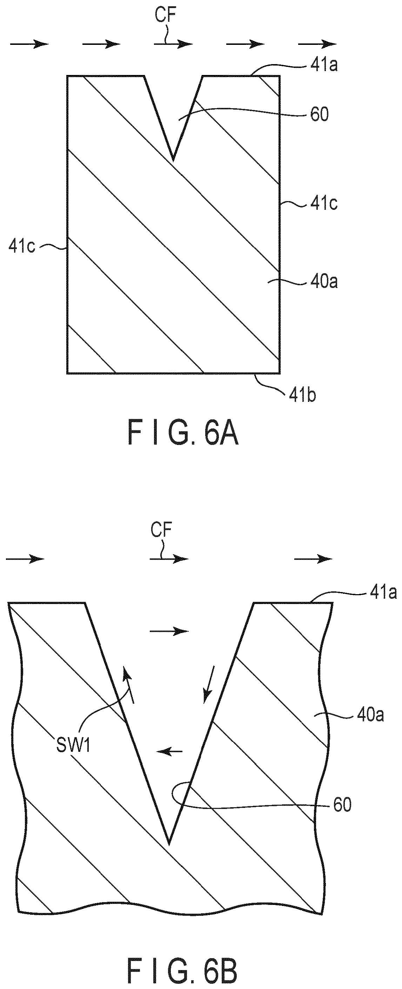

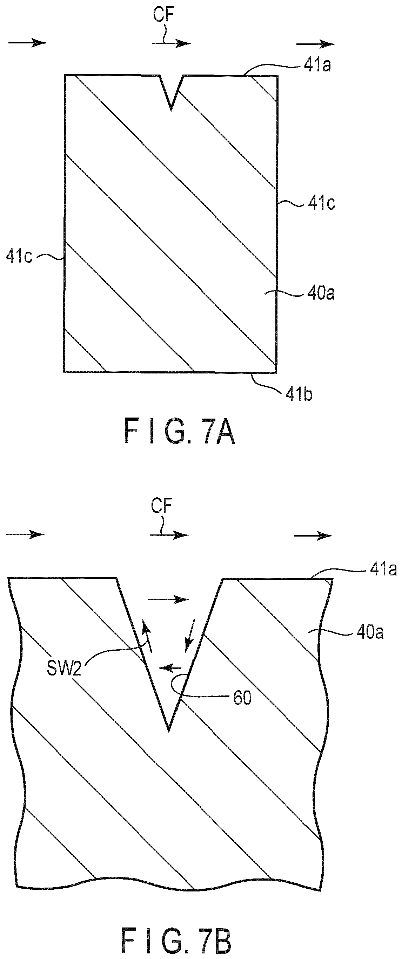

FIG. 6A is a cross-sectional view of the rotor bar end, taken along line C-C of FIG. 3, FIG. 6B is a cross-sectional view of the swage groove portion of the rotor bar end of FIG. 6A. FIG. 7A is a cross-sectional view of the rotor bar end, taken along line D-D of FIG. 3, and FIG. 7B is an enlarged cross-sectional view of the swage groove portion of the rotor bar end of FIG. 7A.

As in FIGS. 5, 6A, and 6B, in the first end swage groove 60a on the first bar end 40a, the depth of the groove is approximately equal to the depth of the swage groove 60 at a position close to the rotor iron core 32 (at base end part), which is deep. The rotation of the rotor 16 generates an air flow CF that flows around the outer circumference of the first bar end 40a. This air flow CF generates a large vortex flow SW1 with high flow velocity in the first end swage groove 60a.

On the other hand, as shown in FIGS. 7A and 7B, in the first end swage groove 60a, at a position distant from the rotor iron core 32 (at tip part), the depth of the groove is shallower than the depth of the groove at the base end part. Therefore, the air flow CF generates a small vortex flow SW2 with low velocity in the first end swage groove 60a at the tip.

As shown in FIG. 5, the flow velocity and static pressure of the vortex flow generated in the first end swage groove 60a are different between the base side and the tip side. That is, at the base of the first end swage groove 60a, the vortex flow velocity is high and the static pressure PS1 is low, and conversely, at the tip of the first end swage groove 60a, the vortex flow velocity is low and the static pressure PS2 is high (PS2 > PS1). Thus, axial flow AF is generated in the first end swage groove 60a from the tip side, where the flow velocity is low and the static pressure PS2 is high, to the base side, where the flow velocity is high and the static pressure PS1 is low. This axial flow AF causes the air in the first end swage groove 60a to flow into the first end swage groove 60a from the outer circumference of the first groove end (end) S2 of the first end swage groove 60a, and the air flows from the rising start point (base) S1 side of the first end swage groove 60a to the outer peripheral side of the first bar end 40a. The air circulating in the first end swage groove 60a receives heat from the first bar end 40a, and rises in temperature, but does not become hot. With the swage groove 60 and the first end swage groove 60a structured as above, the heat dissipation area of the rotor bar 40 increases, and the air temperature in the first end swage groove 60a does not become high, so the heat radiation from the first bar end 40a is accelerated. Therefore, the cooling performance of the rotor bar 40 and rotor iron core 32 is improved, and the temperature of the rotor can be lowered.

As described above, when the pressure roller R for swaging grooves is pressed and rotated from the center side of the rotor iron core 32 toward the first end face 32, the rotor bar 40 tends to warp to the outer circumference side. However, by pressing the rotor bar 40 while rotating the pressure roller R until the rotational center C2 of the pressure roller R coincides with the first end surface 32a of the rotor iron core 32, the warpage of the rotor bar 40 can be suppressed, and the need for post-processing such as cutting the tip of the rotor bar can be omitted.

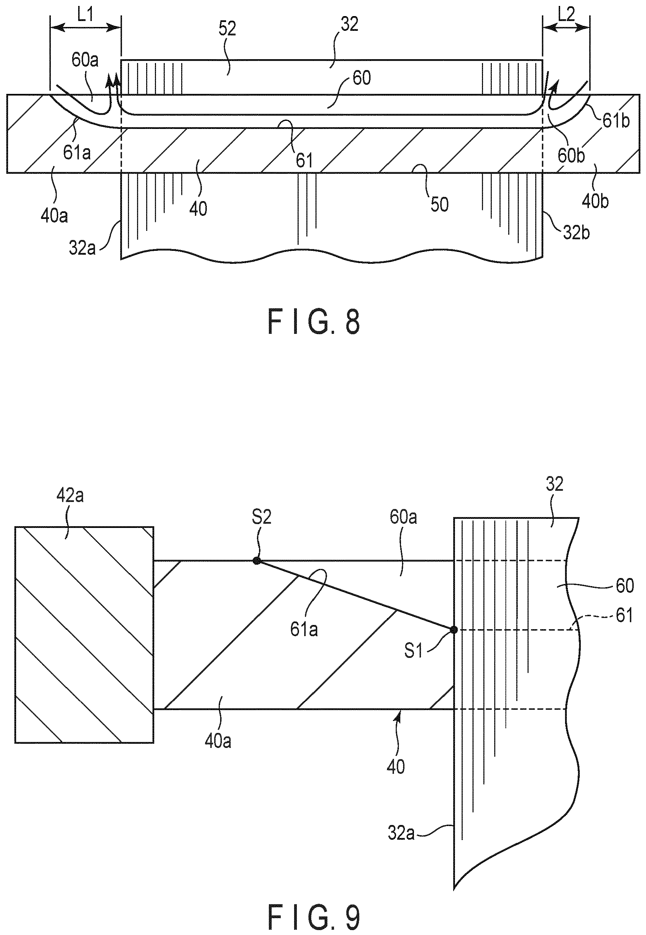

FIG. 8 is a schematic view illustrating the rotor bar and the swage groove.

The swage groove may be provided only with one first bar end 40a, or on both bar ends. As in FIG. 8, according to the present embodiment, the second bar end 40b has a second end swage groove 60b that is continuous with the central swage groove 60. By continuously rotating the aforementioned pressure roller R pressed against the upper surface 41a of the rotor bar 40 from the axial center of the rotor iron core 32 to the second bar end 40b in the axial direction, the swage groove 60 is formed on the upper surface 41a of the rotor bar 40. In the processing of the swage groove 60, the pressure roller R is moved to the second bar end 40b side until the rotational center C2 of the pressure roller R is positioned slightly in front of the second end surface 32b of the rotor iron core 32. As a result, the second end swage groove 60b, which is continuous with the swage groove 60, is formed on the second bar end 40b.

The second end swage groove 60b extends from the location of the second end surface 32b toward the extension end of the second bar end 40b by a length L2. The axial length L2 is different from the axial length L1 of the first end swage groove 60a at the other end. That is,, the length L2 is set to be shorter than the length L1 (L2<L1). The second end swage groove 60b is gradually deepened from the position of the second end surface 32b to the second groove end. That is, the bottom edge 61b of the second end swage groove 60b extends from the bottom edge 61 of the swage groove 60 at the second end surface 32b position to the second groove end on the top surface 41a, sloping outward in the radial direction of the rotor iron core 32. In the present embodiment, the bottom edge 61b is curved and extends in an arc shape.

As the rotor 16 rotates, as shown by the arrow in FIG. 8, in the first end swage groove 60a, as described above, the axial flow AF causes air to flow into the first end swage groove 60a from the outer circumference of the rising end (first groove end) of the first swage groove 60a, and the air flows into the first end swage groove 60a from the outer circumference of the rising end (base) S1 side of the first end swage groove 60a flowing out from the outer circumference of the first bar end 40a.

In the second end swage groove 60b, axial flow causes air to flow into the second end swage groove 60b from the outer side of the rising end (second groove end) of the second end swage groove 60b, and the air flows out from the outer circumference of the second bar end 40b from the rising start (base) side of the second end swage groove 60b.

In the first end swage groove 60a, which has a long axial length L1, the swage groove near the first end face 32a of the rotor iron core 32 is deep, and a large vortex flow with high velocity is generated by the air flowing around the outer circumference of the first bar end 40a. On the other hand, in the second end swage groove 60b, which has a short axial length L2, the swage groove near the second end face 32b of the rotor iron core 32 is shallow, and a small vortex flow with low velocity is generated in the second end swage groove 60b. Furthermore, in the swage groove 60 formed in the center of the rotor bar 40, axial flow is generated from the second end swage groove 60b, which has lower velocity and higher static pressure, to the opposite side, the first end swage groove 60a, which has higher velocity and lower static pressure. Air in the air gap, rotor iron core 32, and opening 52 flows through the swage groove 60 to the first bar end 40a side, and low temperature air flows from the second end swage groove 60b side into swage groove 60a. Therefore, the air gap, rotor iron core 32, rotor iron core near opening 52, and rotor bar 40 will dissipate heat to lower temperature air, which will promote heat dissipation from the rotor 16, and reduce the temperature of the rotor 16.

According to the rotor 16 of the rotary electric machine 10 of the present embodiment structured as above, by devising the swage groove 60 of the rotor bar 40, cooling of the rotor bar 40 and rotor iron core 32 can be accelerated, and the cooling performance can be improved. As a result, the rotor of the rotary electric machine with improved cooling performance and temperature reduction can be achieved.

Next, a rotor of a rotary electric machine according to a modification of the present invention will be described. In the modifications described below, the same reference numbers are attached to the same parts as in the aforementioned embodiment to omit or simplify the detailed description thereof, and the detailed description will focus on the parts that differ from the embodiment.

### (First modification)

FIG. 9 is an enlarged cross-sectional view of a bar end portion of the rotor of the first modification.

The bottom edge 61a of the first end swage groove 60a is not limited to being inclined on an arc, but may also extend linearly from the base S1 to the end S2, as in the figure.

In the first end swage groove 60a structured as above, the same effect as in the embodiment described above can be obtained.

### (Second modification)

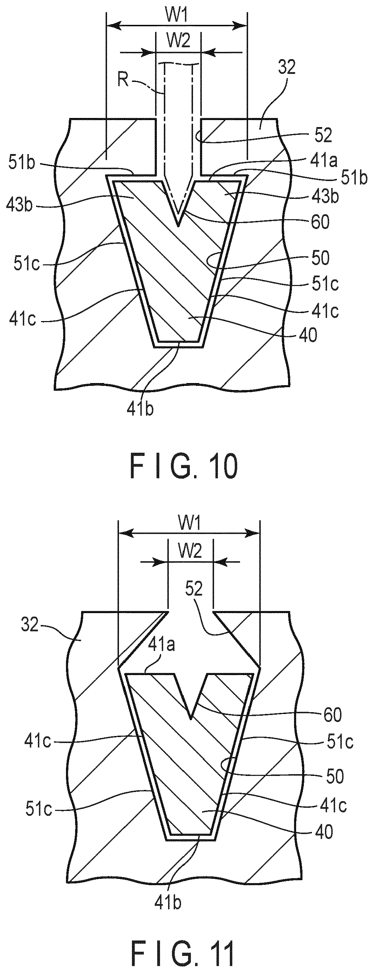

FIG. 10 is an enlarged cross-sectional view of a rotor bar portion of the rotor of the second modification.

As in the figure, according to the second modification, the cross-sectional shape of the rotor bar 40 is formed as a polygon in which the length of the upper surface (first side) 41a facing the opening 52 (circumferential width) is larger than the length of the opposite lower surface (rotational shaft side surface) (second side) 41b (circumferential width), for example, a trapezoid. The pair of sides 41c are inclined to taper toward the lower side 41b. The slot 50 of the rotor iron core 32 is formed in a cross-sectional shape with dimensions and shape corresponding to the rotor bar 40. The width W1 of the upper surface 41a is larger than the width W2 of the opening 52.

When the periphery of the pressure roller R for swage groove processing is pressed against the upper surface 41a of the rotor bar 40 through the opening 52, the rotor bar 40 is pressed against the slope 51c of the slot, and at the same time, the shoulders 43b on the upper side 41a of the rotor bar 40 are plastically deformed, pressed against the shoulder 51b of the slot 50, and fixed to the rotor iron core 32. From one end of the rotor iron core 32 to the other end in the axial direction, the side 41c of the rotor bar 40 is in contact with the slope 51c of the slot 50, and the shoulder 43b of the rotor bar 40 is in contact with the shoulder 51b of the slot 50, reducing the contact thermal resistance between the rotor bar 40 and the rotor iron core 32. This makes it easier for the heat generated by the rotor bar 40 to be transmitted to the rotor iron core 32 and rotational shaft, which have a large heat capacity, and promotes heat dissipation from the rotor bar 40. Thus, the temperature of the rotor bar 40 and rotor iron core 32 can be reduced. Other effects similar to those of the aforementioned embodiment can also be obtained in the second modification.

### (Third modification)

FIG. 11 is an enlarged cross-sectional view of a rotor bar portion of the rotor of the third modification.

As in the figure, according to the third modification, the opening 52 of the rotor iron core 32 is formed so that it gradually becomes wider from the outer surface of the rotor iron core 32 to the upper end of the slot 50, that is, the upper surface 41a of the rotor bar 40. The width of the end of the slot 50 side of the opening 52 is substantially the same as the width W1 of the upper surface 41a. By increasing the width of the opening 52 in this way, the cross-sectional area of the opening 52 is made larger.

In a rotary electric machine with an axially ventilated rotor or a rotor with a skewed rotor iron core, if there is a difference in pressure on both sides of the rotor iron core 32 in the axial direction, the air in the machine will flow axially through the opening 52. In this case, by setting the cross-sectional area of the opening 52 to be large as described above, the ventilation resistance is reduced and the flow rate is increased. This promotes heat dissipation from the rotor iron core 32 and rotor bar 40, making it possible to reduce the temperature of the rotor.

### (Fourth modification)

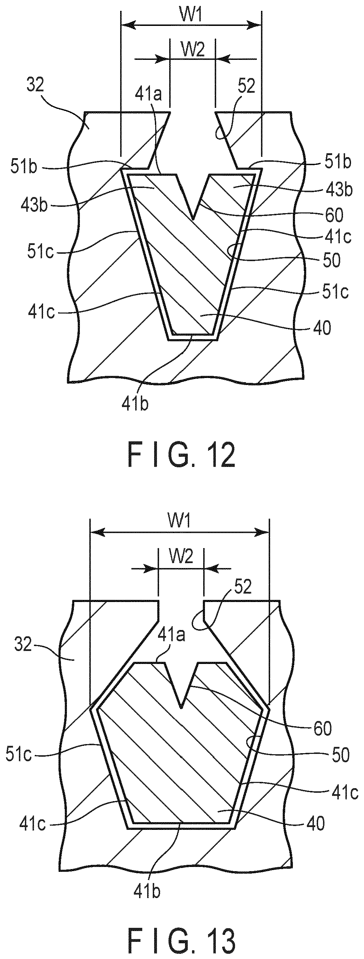

FIG. 12 is an enlarged cross-sectional view of a rotor bar portion of the rotor of the fourth modification.

As in the figure, according to the third modification, the opening 52 of the rotor iron core 32 is formed so that it gradually becomes wider from the outer surface of the rotor iron core 32 to the upper end of the slot 50, that is, the upper surface 41a of the rotor bar 40. The width of the end of the slot 50 side of the opening 52 is set to be smaller than the width W1 of the upper surface 41a. By increasing the width of the opening 52 in this way, the cross-sectional area of the opening 52 is made larger.

Since the width W1 of the upper surface 41a of the rotor bar 40 is larger than the width of the lower end of the opening 52, when the peripheral edge of the pressure roller R is pressed against the upper surface 41a of the rotor bar 40, the rotor bar 40 is pressed against the slope 51c of the slot 50, and at the same time, the shoulder 43b on the top surface 41a side of the rotor bar 40 is plastically deformed and pressed against the shoulder 51b of the slot 50, and is fixed to the rotor iron core 32. From one end to the other in the axial direction of the rotor iron core 32, the side surface 41c of the rotor bar 40 is in contact with the slope 51b of the slot 50, and the shoulder 43b of the rotor bar 40 is in contact with the shoulder 51b of the slot 50. This reduces the contact thermal resistance between the rotor bar 40 and the rotor iron core 32. In addition, by increasing the width of the opening 52, the ventilation resistance of the axial flow is reduced, and the ventilation flow rate is increased. This promotes the heat dissipation of the rotor bar 40 and rotor iron core 32, and improves the cooling performance of the rotor.

### (Fifth modification)

FIG. 13 is an enlarged cross-sectional view of a rotor bar portion of the rotor of the fifth modification.

As in the figure, the cross-sectional shape of the rotor bar 40 is not limited to a trapezoidal shape, but can be any other polygonal shape, for example, a pentagonal shape. The rotor bar 40 has an upper surface 41a facing the opening 52 and a lower surface 41b on the opposite side, and a swaging groove 60 is provided on the upper surface 41a. The rotor bar 40 has a width W1 that is largest approximately halfway between the upper and lower surfaces 41a and 41b. Each of the bent and sloping sides 41c is then pressed against the corresponding slope of the slot 50. The slot side end of the opening 52 gradually increases in circumferential width, and is approximately equal in width to the top surface of the rotor bar 40.

The fifth modification structured as above can achieve the same effect as the third and fourth modifications described above.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made within the scope of the appended claims

## Claims

1. A rotor (16) of a rotary electric machine (10), comprising:
a rotational shaft (30) which is rotatable about a central axis (C1);
a rotator core (32) coaxially fixed to the rotational shaft (30), the rotator core including a first end surface (32a) positioned on one end side in an axial direction and a second end surface (32b) positioned on the other end side in the axial direction, an outer peripheral surface which is coaxial with the central axis (C1), a plurality of slots (50) each formed to passing therethrough in the axial direction, opening on the first and second end surfaces, disposed at intervals in a circumferential direction of the outer peripheral surface;
a plurality of rotor bars (40) each inserted through the slot (50), and including a first bar end (40a) extending from the first end surface (32a) in the axial direction and a second bar end (40b) extending from the second end surface (32b) in the axial direction;
a first annular end ring (42a) fixed to extending ends of the first bar ends; and
a second annular end ring (42b) fixed to extending ends of the second bar ends, the rotator core (32) comprises a plurality of openings (52) each formed in the outer peripheral surface, extending in the axial direction, and communicating with the slot (50); and
each of the rotor bars (40) includes a swaged groove (60) extending in the axial direction to be opposed to the opening (52) formed in the outer peripheral surface, **characterised in that** a first end swaged groove (60a) is formed in the first bar end (40a) continuously to the swaged groove, and the first end swaged groove extends from the position of the first end surface toward the first end ring with being inclined to an outside in a radial direction of the rotator core (32) such that the depth of the swaged groove gradually becomes shallower.

2. The rotor (16) of rotary electric machine (10) of claim 1, wherein each of the rotor bars (40) includes a second end swaged groove (60b) formed in the second bar end (40b) continuously to the swaged groove, and the second end swaged groove extends from the position of the second end surface (32b) toward the second end ring (42b) with being inclined to the outside in the radial direction of the rotator core (32).

3. The rotor (16) of rotary electric machine (10) of claim 2, wherein, given a length of the first end swaged groove (60a) in the axial direction from the first end surface (32a) to an groove end (60) is a first length and a length of the second end swaged groove (60b) in the axial direction from the second end surface (32b) to a groove end is a second length, the first length and the second length are different from each other.

4. The rotor (16) of rotary electric machine (10)of any one of claims 1 to 3, wherein the rotor bar (40) has a polygonal cross-sectional shape in which a first side (41a) opposed to the opening (52) is greater than a second side (41b) opposed to the first side (41a).

5. The rotor (16) of rotary electric machine (10) of any one of claims 1 to 3, wherein the opening (52) has a width (W2) in the circumferential direction, and the width in the circumferential direction gradually increases from the outer peripheral surface side toward the slot side.

6. The rotor (16) of rotary electric machine (10) of any one of claims 1 to 3, wherein the rotor bar (40) includes a first surface having a first width (W1) in the circumferential direction and opposed to the opening, and a width (W2) in the circumferential direction in an end of the opening on the slot side is smaller than the first width (W1).

7. The rotor (16) of rotary electric machine (10) of any one of claims 1 to 3, wherein the first end swaged groove (60a) extends from the position of the first end surface (32a) to an extending end of the first end swaged groove (60a) in a curved manner.

8. The rotor (16) of rotary electric machine (10) of any one of claims 1 to 3, wherein the first end swaged groove (60a) extends from the position of the first end surface (32a) to an extending end of the first end swaged groove (60a) in a linear manner.

## Patentansprüche

1. Rotor (16) einer elektrischen Drehmaschine (10), umfassend:
eine Drehwelle (30), die um eine Mittelachse (C1) drehbar ist;
einen Rotationskern (32), der koaxial an der Drehwelle (30) befestigt ist, wobei der Rotationskern eine erste Endfläche (32a), die an einer Endseite in einer axialen Richtung positioniert ist, eine zweite Endfläche (32b), die an der anderen Endseite in der axialen Richtung positioniert ist, eine äußere Umfangsfläche, die koaxial zur Mittelachse (C1) ist, und eine Vielzahl von Schlitzen (50) umfasst, die jeweils gebildet sind, um diese in der axialen Richtung zu durchqueren, sich auf der ersten und der zweiten Endfläche öffnen und in Intervallen in einer umlaufenden Richtung der äußeren Umfangsfläche angeordnet sind;
eine Vielzahl von Rotorstangen (40), die jeweils durch den Schlitz (50) eingesetzt sind und ein erstes Stangenende (40a), das sich von der ersten Endfläche (32a) in der axialen Richtung erstreckt, und ein zweites Stangenende (40b) umfassen, das sich von der zweiten Endfläche (32b) in der axialen Richtung erstreckt;
einen ersten ringförmigen Endring (42a), der an sich erstreckenden Enden der ersten Stangenenden befestigt ist; und
einen zweiten ringförmigen Endring (42b), der an sich erstrechenden Enden der zweiten Stangenenden befestigt ist,
wobei der Rotationskern (32) eine Vielzahl von Öffnungen (52) umfasst, die jeweils in der äußeren Umfangsfläche gebildet sind, sich in der axialen Richtung erstrecken und mit dem Schlitz (50) verbunden sind; und
jede der Rotorstangen (40) eine verstemmte Nut (60) umfasst, die sich so in der axialen Richtung erstreckt, dass sie der Öffnung (52) entgegengesetzt ist, die in der äußeren Umfangsfläche gebildet ist, **dadurch gekennzeichnet, dass** ein erstes Ende (60a) der verstemmten Nut in dem ersten Stangenende (40a) ununterbrochen mit der verstemmten Nut gebildet ist und das erste Ende der verstemmten Nut sich von der Position der ersten Endfläche hin zu dem ersten Endring erstreckt und dabei derart zu einer Außenseite in einer radialen Richtung des Rotationskerns (32) geneigt ist, dass die Tiefe der verstemmten Nut allmählich flacher wird.

2. Rotor (16) einer elektrischen Drehmaschine (10) nach Anspruch 1, wobei jede der Rotorstangen (40) ein zweites Ende (60b) der verstemmten Nut umfasst, das in dem zweiten Stangenende (40b) ununterbrochen mit der verstemmten Nut gebildet ist und das zweite Ende der verstemmten Nut sich von der Position der zweiten Endfläche (32b) hin zu dem zweiten Endring (42b) erstreckt und dabei zur Außenseite in der radialen Richtung des Rotationskerns (32) geneigt ist.

3. Rotor (16) einer elektrischen Drehmaschine (10) nach Anspruch 2, wobei, wenn eine gegebene Länge des ersten Endes (60a) der verstemmten Nut in der axialen Richtung von der ersten Endfläche (32a) zu einem Nutende (60) eine erste Länge ist und eine Länge des zweiten Endes (60b) der verstemmten Nut in der axialen Richtung von der zweiten Endfläche (32b) zu einem Nutende eine zweite Länge ist, die erste Länge und die zweite Länge sich voneinander unterscheiden.

4. Rotor (16) einer elektrischen Drehmaschine (10) nach einem der Ansprüche 1 bis 3, wobei die Rotorstange (40) eine vieleckige Querschnittsform aufweist, in der eine erste Seite (41a), die der Öffnung (52) entgegengesetzt ist, größer als eine zweite Seite (41b) ist, die der ersten Seite (41a) entgegengesetzt ist.

5. Rotor (16) einer elektrischen Drehmaschine (10) nach einem der Ansprüche 1 bis 3, wobei die Öffnung (52) eine Breite (W2) in der umlaufenden Richtung aufweist und die Breite in der umlaufenden Richtung allmählich von der Seite der äußeren Umfangsfläche hin zu der Schlitzseite zunimmt.

6. Rotor (16) einer elektrischen Drehmaschine (10) nach einem der Ansprüche 1 bis 3, wobei die Rotorstange (40) eine erste Fläche umfasst, die eine erste Breite (W1) in der umlaufenden Richtung und entgegengesetzt zur Öffnung aufweist, und eine Breite (W2) in der umlaufenden Richtung in einem Ende der Öffnung auf der Schlitzseite kleiner als die erste Breite (W1) ist.

7. Rotor (16) einer elektrischen Drehmaschine (10) nach einem der Ansprüche 1 bis 3, wobei das erste Ende (60a) der verstemmten Nut sich auf eine gekrümmte Weise von der Position der ersten Endfläche (32a) zu einem sich erstreckenden Ende des ersten Endes (60a) der verstemmten Nut erstreckt.

8. Rotor (16) einer elektrischen Drehmaschine (10) nach einem der Ansprüche 1 bis 3, wobei das erste Ende (60a) der verstemmten Nut sich auf eine lineare Weise von der Position der ersten Endfläche (32a) zu einem sich erstreckenden Ende des ersten Endes (60a) der verstemmten Nut erstreckt.

## Revendications

1. Rotor (16) de machine électrique rotative (10), comprenant :
un arbre de rotation (30) qui est rotatif autour d'un axe central (C1) ;
un noyau de rotateur (32) fixé coaxialement à l'arbre de rotation (30), le noyau de rotateur incluant une première surface d'extrémité (32a) positionnée sur un côté d'extrémité dans une direction axiale et une deuxième surface d'extrémité (32b) positionnée sur l'autre côté d'extrémité dans la direction axiale, une surface périphérique extérieure qui est coaxiale à l'axe central (C1), une pluralité de fentes (50) formées chacune pour traverser celle-ci dans la direction axiale, s'ouvrant sur les première et deuxième surfaces d'extrémité, disposées à des intervalles dans une direction circonférentielle de la surface périphérique extérieure ;
une pluralité de barres de rotor (40) insérées chacune à travers la fente (50), et incluant une première extrémité de barre (40a) s'étendant de la première surface d'extrémité (32a) dans la direction axiale et une deuxième extrémité de barre (40b) s'étendant de la deuxième surface d'extrémité (32b) dans la direction axiale ;
une première bague d'extrémité annulaire (42a) fixée à des extrémités d'extension des premières extrémités de barre ; et
une deuxième bague d'extrémité annulaire (42b) fixée à des extrémités d'extension des deuxièmes extrémités de barre,
le noyau de rotateur (32) comprend une pluralité d'ouvertures (52) formées chacune dans la surface périphérique extérieure, s'étendant dans la direction axiale, et communiquant avec la fente (50) ; et
chacune des barres de rotor (40) inclut une rainure sertie (60) s'étendant dans la direction axiale pour être opposée à l'ouverture (52) formée dans la surface périphérique extérieure, **caractérisé en ce qu'**une première rainure sertie d'extrémité (60a) est formée dans la première extrémité de barre (40a) dans la continuité de la rainure sertie, et la première rainure sertie d'extrémité s'étend de la position de la première surface d'extrémité vers la première bague d'extrémité en étant inclinée vers un extérieur dans une direction radiale du noyau de rotateur (32) de sorte que la profondeur de la rainure sertie diminue progressivement.

2. Rotor (16) de machine électrique rotative (10) selon la revendication 1, dans lequel chacune des barres de rotor (40) inclut une deuxième rainure sertie d'extrémité (60b) formée dans la deuxième extrémité de barre (40b) dans la continuité de la rainure sertie, et la deuxième rainure sertie d'extrémité s'étend de la position de la deuxième surface d'extrémité (32b) vers la deuxième bague d'extrémité (42b) en étant inclinée vers l'extérieur dans la direction radiale du noyau de rotateur (32).

3. Rotor (16) de machine électrique rotative (10) selon la revendication 2, dans lequel, étant donné qu'une longueur de la première rainure sertie d'extrémité (60a) dans la direction axiale de la première surface d'extrémité (32a) à une extrémité de rainure (60) est une première longueur et qu'une longueur de la deuxième rainure sertie d'extrémité (60b) dans la direction axiale de la deuxième surface d'extrémité (32b) à une extrémité de rainure est une deuxième longueur, la première longueur et la deuxième longueur sont différentes l'une de l'autre.

4. Rotor (16) de machine électrique rotative (10) selon l'une quelconque des revendications 1 à 3, dans lequel la barre de rotor (40) présente une forme de section transversale polygonale dans laquelle un premier côté (41a) opposé à l'ouverture (52) est plus grand qu'un deuxième côté (41b) opposé au premier côté (41a).

5. Rotor (16) de machine électrique rotative (10) selon l'une quelconque des revendications 1 à 3, dans lequel l'ouverture (52) présente une largeur (W2) dans la direction circonférentielle, et la largeur dans la direction circonférentielle augmente progressivement depuis le côté de surface périphérique extérieure vers le côté de fente.

6. Rotor (16) de machine électrique rotative (10) selon l'une quelconque des revendications 1 à 3, dans lequel la barre de rotor (40) inclut une première surface présentant une première largeur (W1) dans la direction circonférentielle et opposée à l'ouverture, et une largeur (W2) dans la direction circonférentielle dans une extrémité de l'ouverture sur le côté de fente est inférieure à la première largeur (W1).

7. Rotor (16) de machine électrique rotative (10) selon l'une quelconque des revendications 1 à 3, dans lequel la première rainure sertie d'extrémité (60a) s'étend de la position de la première surface d'extrémité (32a) vers une extrémité d'extension de la première rainure sertie d'extrémité (60a) de manière incurvée.

8. Rotor (16) de machine électrique rotative (10) selon l'une quelconque des revendications 1 à 3, dans lequel la première rainure sertie d'extrémité (60a) s'étend de la position de la première surface d'extrémité (32a) vers une extrémité d'extension de la première rainure sertie d'extrémité (60a) de manière linéaire.
